(19) **Europäisches Patentamt / European Patent Office / Office européen des brevets**

(11) **EP 1 732 774 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(21) Anmeldenummer: **05707900.6**

(22) Anmeldetag: **01.02.2005**

(51) Int Cl.:
**B60G 17/015** (2006.01)

(86) Internationale Anmeldenummer:
**PCT/EP2005/050406**

(87) Internationale Veröffentlichungsnummer:
**WO 2005/095132 (13.10.2005 Gazette 2005/41)**

(54) **VERFAHREN ZUR NIVEAUREGULIERUNG LUFTGEFEDERTER FAHRZEUGE**

HEIGHT CONTROL METHOD FOR AIR-SUSPENDED VEHICLES

PROCEDE DE CORRECTION D'ASSIETTE SUR DES VEHICULES A SUSPENSION PNEUMATIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **31.03.2004 DE 102004015651**

(43) Veröffentlichungstag der Anmeldung:
**20.12.2006 Patentblatt 2006/51**

(73) Patentinhaber: **Continental Aktiengesellschaft**
**30165 Hannover (DE)**

(72) Erfinder:
• **STILLER, Alexander**
**30823 Garbsen (DE)**
• **NETTELMANN, Marc**
**30826 Garbsen (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**DE-A1- 4 333 823     US-A- 5 489 115**

• **PATENT ABSTRACTS OF JAPAN Bd. 012, Nr. 004 (M-657), 8. Januar 1988 (1988-01-08) & JP 62 168704 A (TOYOTA MOTOR CORP), 25. Juli 1987 (1987-07-25)**

## Beschreibung

Die Erfindung betrifft ein Verfahren zur Niveauregulierung luftgefederter Fahrzeuge um einen Niveau-Sollwert, bei dem vor dem Erreichen des Sollwertes Niveauverstelleinrichtungen abgeschaltet werden.

Aus der DE 43 33 823 A1 ist ein Verfahren zur Niveauregelung eines Fahrzeuges mit Luftfederung bekannt, bei dem Ventile abhängig von der während der Verstellung gemessenen Verstellgeschwindigkeit bereits vor dem Erreichen des Sollniveaus abgeschaltet werden und das Sollniveau nach einem Ausschwingvorgang erreicht wird.

Nachteilig an dem bekannten Stand der Technik ist die Tatsache, dass auf Grundlage allein der Verstellgeschwindigkeit keine präzise Vorhersage darüber getroffen werden kann, wann die Niveauverstelleinrichtung abgeschaltet werden soll.

Ausgehend von diesem Problem liegt der Erfindung die Aufgabe zugrunde, ein Verfahren bereitzustellen, mit dem schnell und exakt ein Fahrzeugaufbau auf ein SollNiveau verfahren werden kann.

Erfindungsgemäß wird diese Aufgabe durch ein Verfahren mit den Merkmalen des Anspruchs 1 gelöst, bei dem der Zeitpunkt der Abschaltung auch in Abhängigkeit von der wirksamen Dämpfung bzw. Dämpferkraft festgelegt wird. Gerade bei aktiven oder semiaktiven Fahrwerken besteht die Möglichkeit, dass die Dämpfung während des Fahrzeugbetriebes geändert wird, so dass sich bei einer sich verändernden Dämpfung unterschiedliche Ausschwingverhalten einstellen. Somit besteht die Gefahr, dass der Niveau-Sollwert bei einer Niveauverstellung nicht präzise erreicht wird. Durch die Berücksichtigung der wirksamen Dämpfung ist es möglich, die Niveauregulierung zu präzisieren und schneller zu dem gewünschten Niveau-Sollwert zu gelangen.

In einer Weiterbildung der Erfindung ist es vorgesehen, dass entweder dem Niveau-Sollwert, dem Niveau-Istwert oder der Regeldifferenz eine Hilfsgröße aufgeschaltet wird, die von der aktuell wirksamen Dämpfung abhängig ist. Je nachdem, welcher Wert der Niveauregulierung zugrunde gelegt wird, um den Abschaltzeitpunkt festzulegen, wird diesem Wert die entsprechende Hilfsgröße aufgeschaltet, die eine Korrektur des Abschaltzeitpunktes bewirkt. Dabei kann diese Hilfsgröße von dem Bezugswert abgezogen werden oder zu diesem addiert werden, je nachdem, wie der Regelalgorithmus ausgebildet ist.

In einer Weiterbildung des Verfahrens ist vorgesehen, dass der Zeitpunkt der Abschaltung in Abhängigkeit von der Regelgeschwindigkeit festgelegt wird, um ein Überschwingen über den Niveau-Sollwert aufgrund der Trägheit des bewegten Fahrzeugaufbaus möglichst zu vermeiden. Je höher die Regelgeschwindigkeit ist, desto eher muss eine Abschaltung erfolgen. Die Regelgeschwindigkeit - beim Anheben des Fahrzeuges die Aufregelgeschwindigkeit, beim Absenken des Abregelgeschwindigkeit - wird bei der Berechnung der Hilfsgröße berücksichtigt, um ein möglichst präzises Einstellen des Niveau-Sollwertes zu erreichen.

Um eine Niveauregulierung bei aktiven oder semiaktiven Fahrwerken nicht mit einer Dämpferkraftregulierung in Kollision zu bringen, ist vorgesehen, dass bei einer aktivierten Niveauregulierung ein Signal erzeugt und an eine Dämpferkraftregulierungseinrichtung übermittelt wird. Die Dämpferkraft wird dann während der aktivierten Niveauregulierung verändert, insbesondere bei einer Verstellung des Fahrzeugniveaus reduziert, damit das Niveauregelsystem nicht gegen das Dämpferkraftregelsystem arbeitet. Ebenfalls ist es vorgesehen, dass zunächst die Dämpferkraft reduziert wird, während die Niveauregulierung aktiviert ist. Um ein Überschwingen zu vermeiden, wird kurz vor Erreichen des Niveau-Sollwertes die Dämpferkraft erhöht, was sehr kurzfristig aufgrund der schnell arbeitenden Ventile möglich ist.

Das an die Dämpferkraftregulierungseinrichtung übermittelte Signal beinhaltet in einer Weiterbildung eine Information über die Regelgeschwindigkeit, so dass die Dämpferkraft auch in Abhängigkeit von der Regelgeschwindigkeit verändert, insbesondere reduziert und erhöht werden kann. Die Reduzierung oder die Erhöhung der Dämpferkraft erfolgt im wesentlichen unabhängig von der normalen Dämpferkraftregelung eines luftgefederten oder hydro-pneumatisch gefederten Fahrzeuges nach dem Skyhook-Algorithmus.

Um eine unbeabsichtigte Reduzierung der Dämpferkraft während fahrdynamisch kritischer Situationen zu verhindern, wird die Dämpferkraft bei aktivierter Niveauregulierung nur dann reduziert, wenn die Aufregelgeschwindigkeiten in einem durch Grenzwerte festgelegten Bereich liegen. Bei Überschreiten dieser Grenzwerte wird die Dämpferkraft erhöht bzw. das normale Regelverfahren der Dämpferkraft durchgeführt.

Um die Hilfsgröße sowie die Dämpferkraft möglichst präzise berechnen zu können, wird die Regelgeschwindigkeit vorab ermittelt, beispielsweise indem bei Antritt der Fahrt eine Testverstellung durchgeführt wird. Die Regelgeschwindigkeit ändert sich z.B. durch die Beladung des Fahrzeuges, was wiederum Einfluß auf die Dämpfung und das Maß der Dämpferkraftregulierung hat, um ein Überschwingen zu vermeiden oder ein möglichst schnelles Verstellen auf den Niveau-Sollwert zu erreichen. Der festgelegte Parameter wird dann der Dämpferkraftregulierungseinrichtung übermittelt und zur Anpassung der Dämpferkraft verwendet.

Die Dämpferkraftregelung kann in einer Weiterbildung in Abhängigkeit von Fahrdynamikfaktoren wie Lenkbewegung, Lenkwinkel, Bremsdruck oder ermittelten Beschleunigungswerten erfolgen, insbesondere kann bei Vorliegen fahrdynamisch kritischer Situationen eine Reduzierung der Dämpferkraft ausgesetzt werden.

In einer Weiterbildung der Erfindung ist vorgesehen, dass der Zeitpunkt der Abschaltung in Abhängigkeit von der Änderung des Niveau-Sollwertes festgelegt wird, mit einer Sollwertänderung, die sich aus der Differenz des Niveau-Sollwertes vor der Regelung und dem neu festgelegten Niveau-Sollwert ergibt.

Nachfolgend werden Ausführungsbeispiele der Erfindung anhand der Figuren näher erläutert. Es zeigen:

Figur 1 -    ein Schaltbild einer Niveauregulierung;

Figur 2 -    ein Kennfeld zur Bestimmung einer Vorhaltegröße;

Figur 3 -    den Verlauf eines Dämpfungskoeffizienten über eine Verstellgröße;

Figur 4 -    eine Schemadarstellung eines Masse-Feder-Dämpfer-Systems;

Figur 5 -    ein Schaltbild mit verschiedenen Möglichkeiten der Aufschaltung einer Hilfsgröße;

Figur 6 -    ein Schaltbild für die Aufschaltung einer Hilfsgröße aufgrund einer Sollwertveränderung;

Figur 7 -    ein Schaltbild der Aufschaltung einer Dämpfergröße;

Figur 8 -    eine Darstellung der Änderung der Niveau-Sollhöhe; sowie

Figur 9 -    eine Darstellung der Bereiche, in denen eine Dämpferregelung angepasst wird.

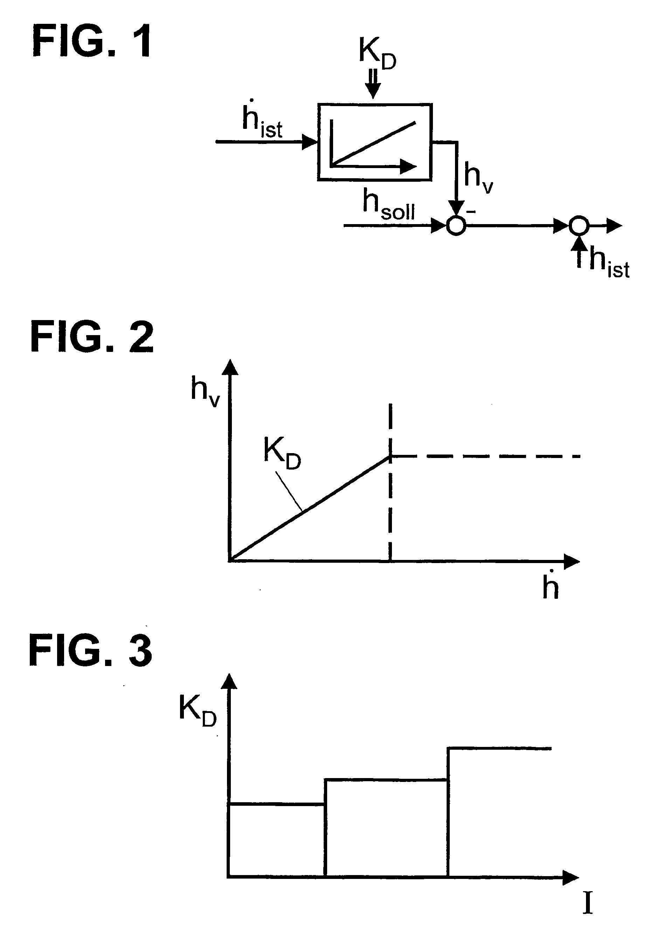

Figur 1 zeigt ein Schaltbild einer Niveauregulierung, bei der der Niveau-Sollwert $h_{Soll}$ mit einem Vorhaltewert $h_v$ verknüpft wird. Vorliegend wird der Vorhaltewert $h_v$ von dem Niveau-Sollwert $h_{Soll}$ subtrahiert. Der Vorhaltewert $h_v$ wird aus der gegenwärtig gemessenen Verstellgeschwindigkeit $\overset{\bullet}{h_{ist}}$ und dem Dämpfungskoeffizienten $K_D$ ermittelt, der sich bei einer elektrischen Verstellung eines Ventils an einem Dämpfer auch als Dämpferstrom $I_{Dämpf}$ darstellen lässt.

Die Kombination aus dem Vorhaltewert $h_v$ und dem Niveau-Sollwert $h_{Soll}$ wird mit dem gegenwärtig vorhandenen Niveau $h_{ist}$ verglichen. Sofern die beiden Werte übereinstimmen, wird die Niveauregulierung abgeschaltet. Um den momentanen Wert des Niveaus $h_{ist}$ zu ermitteln, sind Mittel zur Erfassung des aktuellen Niveaus oder der Abstandsänderung zwischen der Fahrzeugachse und dem Fahrzeugaufbau vorhanden.

Um die Vorhaltegröße $h_v$ zu bestimmen, wird eine Kennlinie aufgestellt, die in der Figur 2 dargestellt ist. Dabei ist der Vorhalt $h_v$ über der Verstellgeschwindigkeit $h°$ aufgetragen, die Steigung der Geraden ist dabei durch den Dämpfungskoeffizienten $K_D$ bestimmt.

Ebenfalls ist es möglich, statt Kennlinien Kennfelder oder feste Parameter zur Veränderung des Dämpfungskoeffizienten $K_D$ vorzunehmen. Eine mögliche Staffelung des Dämpfungskoeffizienten $K_D$ ist in der Figur 3 dargestellt, alternativ zu der stufenweisen Veränderung des Dämpfungskoeffizienten $K_D$ kann auch eine kontinuierliche Veränderung erfolgen.

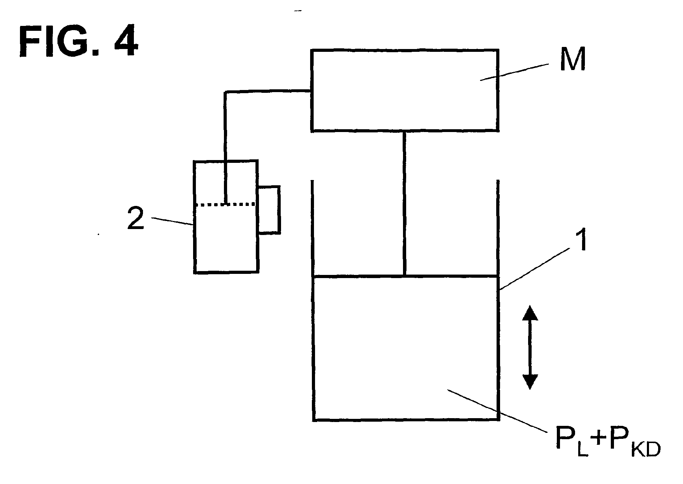

In der Figur 4 ist ein vereinfachtes Modell eines Systems aus einer Masse M einer Luftfeder 1 und einem Dämpfer 2 dargestellt. Die Masse M stützt sich auf der Luftfeder 1 ab, so dass in dem luftgefüllten Raum der Luftfeder 1 ein Druck $P_L$ besteht. An der Masse M ist der Dämpfer 2 gekoppelt, der in Abhängigkeit von der Regelgeschwindigkeit eine Dämpferkraft $F_D$ in das System mit einbringt, wobei die Dämpferkraft $F_D$ das Produkt aus der Regelgeschwindigkeit $h°$ und dem Dämpfungskoeffizienten $K_D$ ist. Durch den Dämpfer 2 wird bei einem Anheben der Masse M eine zusätzliche Verstellkraft benötigt, die der Dämpferkraft $F_D$ entspricht, was insbesondere bei schnellen Verstellungen des Niveaus zu einer hohen Dämpferkraft $F_D$ und damit zu einem erhöhten Energieaufwand führt. Um die Masse M anzuheben, muss zur Kompensierung der Dämpferkraft ein höherer Druck in der Luftfeder 1 bereitgestellt werden, als es eigentlich zum Erreichen des Niveau-Sollwertes notwendig wäre. Wird die wirksame Dämpfung bei der Niveauregulierung nicht berücksichtigt, kommt es zu einem Überschwingen und zu einer relativ langsamen Verstellung. Diesem Umstand wird dadurch begegnet, dass der Zeitpunkt der Abschaltung der Niveauverstelleinrichtung, beispielsweise eines Kompressors oder eines Ventils, in Abhängigkeit von der wirksamen Dämpfung bzw. der wirksamen Dämpferkraft $F_D$ festgelegt wird.

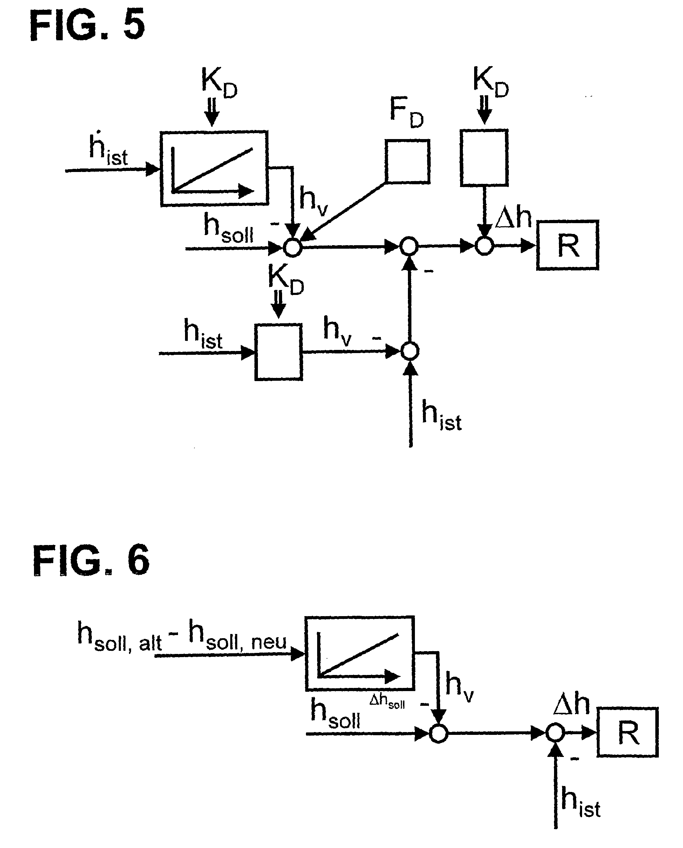

In dem Schaltbild der Figur 5 sind verschiedene Möglichkeiten dargestellt, um die Dämpfung bei der Wahl des Zeitpunktes zur Abschaltung der Niveauverstelleinrichtungen aufzuschalten. Die Hilfsgröße des Vorhaltes $h_v$ kann somit entweder bei dem Niveau-Sollwert $h_{Soll}$, dem Niveau-Istwert $h_{Ist}$ oder bei der Regeldifferenz $\Delta h$ aufgeschaltet werden, um so den Regler R mit den entsprechenden Informationen zu versorgen.

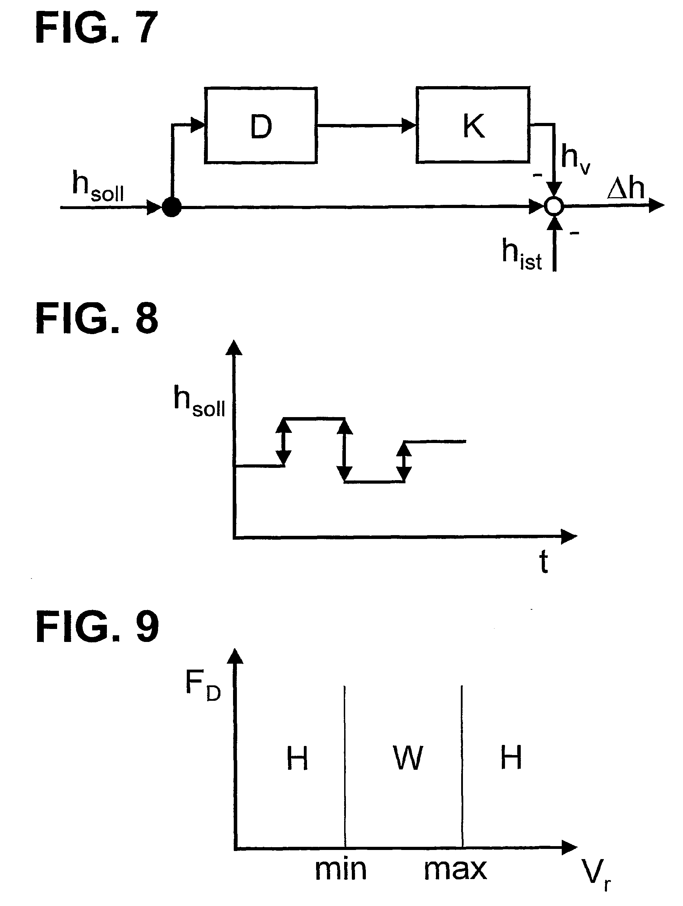

In der Figur 6 ist dargestellt, wie die Hilfsgröße $h_v$ dem Niveau-Sollwert $h_{Soll}$ aufgeschaltet wird, wenn statt der Niveauregelgeschwindigkeit die Differenz zwischen dem Niveau-Sollwert $h_{Soll}$ vor der Regelung und der Niveau-Sollwert $h_{Soll, neu}$, der neuberechnet wurde, als Eingangsgröße verwendet wird. Aus der Sollwertänderung $\Delta_{hsoll}$ ergibt sich der Vorhaltewert $h_v$, über den der Zeitpunkt der Abschaltung in Abhängigkeit von der wirksamen Dämpfung festgelegt wird. Eine weitere Möglichkeit der Aufschaltung der Hilfsgröße $h_v$ ist in der Figur 7 dargestellt, bei der im Element D die zeitliche Abbildung des Dämpfergliedes gebildet wird, dem ein Dämpfungsfaktor K aufgeschaltet wird, so dass sich daraus der Vorhaltewert $h_v$ ergibt. Aus dem Vergleich der Niveau-Sollwertgröße $h_{Soll}$, dem Vorhaltewert $h_v$ und der Niveau-Istgröße $h_{Ist}$ wird die Regeldifferenz $\Delta h$ bestimmt. Die Änderung der Sollwerthöhe $h_{Soll}$ ist in der Figur 8 dargestellt, bei der die Sollwerthöhe über die Zeit aufgetragen ist.

In der Figur 9 sind Bereiche der Verstellgeschwindigkeit $V_R$ abgegrenzt. Liegt die Geschwindigkeit der Fahrzeugaufbaubewegung $V_R$ unterhalb eines Grenzwertes, wird eine normale Dämpferregelung in dem Bereich H stattfinden, gleiches gilt, wenn der Grenzwert max überschritten wird. Zwischen dem unteren Grenzwert min und dem oberen Grenzwert max wird in dem Bereich W eine reduzierte Dämpferkraft und damit ein weicher Dämpfer eingestellt.

**Patentansprüche**

1. Verfahren zur Niveauregulierung luftgefederter Fahrzeuge um einen Niveau-Sollwert, bei dem vor Erreichen des Sollwertes Niveauverstelleinrichtungen abgeschaltet werden, **dadurch gekennzeichnet, dass** der Zeitpunkt der Abschaltung in Abhängigkeit von der wirksamen Dämpferkraft festgelegt wird.

2. Verfahren nach Anspruch 1, **dadurch gekennzeichnet, dass** dem Niveau-Sollwert, einem Niveau-Istwert oder einer Regeldifferenz eine Hilfsgröße aufgeschaltet wird, die von der aktuell wirksamen Dämpferkraft abhängig ist.

3. Verfahren nach Anspruch 1 oder 2, **dadurch gekennzeichnet, dass** der Zeitpunkt der Abschaltung in Abhängigkeit von der Regelgeschwindigkeit festgelegt wird.

4. Verfahren nach Anspruch 2 oder 3, **dadurch gekennzeichnet, dass** die Regelgeschwindigkeit bei der Berechnung der Hilfsgröße berücksichtigt wird.

5. Verfahren nach einem der voranstehenden Ansprüche, **dadurch gekennzeichnet, dass** bei aktivierter Niveauregulierung ein Signal erzeugt und an eine Dämpferkraftregulierungseinrichtung übermittelt wird, mit der die Dämpferkraft während der aktivierten Niveauregulierung verändert wird.

6. Verfahren nach Anspruch 5, **dadurch gekennzeichnet, dass** das Signal eine Information über die Regelgeschwindigkeit beinhaltet und die Dämpferkraft in Abhängigkeit von der Regelgeschwindigkeit verändert wird.

7. Verfahren nach Anspruch 5 oder 6, **dadurch gekennzeichnet, dass** die Dämpferkraft nur bei Regelgeschwindigkeiten verändert wird, die in einem durch Grenzwerte festgelegten Bereich liegen und dass bei Überschreiten der Grenzwerte die Dämpferkraft erhöht wird.

8. Verfahren nach einem der Ansprüche 5 bis 7, **dadurch gekennzeichnet, dass** die Regelgeschwindigkeit vorab ermittelt und ein Parameter für die Anpassung der Dämpferkraft anhand der ermittelten Regelgeschwindigkeit festgelegt wird.

9. Verfahren nach einem der Ansprüche 5 bis 8, **dadurch gekennzeichnet, dass** die Anpassung der Dämpferkraft in Abhängigkeit von Fahrdynamik-Parametern, insbesondere der Lenkbewegung, dem Lenkwinkel, dem Bremsdruck und/oder ermittelten Beschleunigungskräften erfolgt.

10. Verfahren nach einem der voranstehenden Ansprüche, **dadurch gekennzeichnet, dass** der Zeitpunkt der Abschaltung in Abhängigkeit von der Änderung des Niveau-Sollwertes festgelegt wird.

**Claims**

1. Method for adjusting the ride level of air-suspension vehicles about a setpoint ride level value, in which level adjustment devices are deactivated before the setpoint value is reached, **characterized in that** the time of deactivation is defined as a function of the effective damping.

2. Method according to Claim 1, **characterized in that** an auxiliary variable which is dependent on the currently effective damping is applied to the setpoint ride level value, an actual ride level value or a control difference.

3. Method according to Claim 1 or 2, **characterized in that** the time of deactivation is defined as a function of the adjustment speed.

4. Method according to Claim 2 or 3, **characterized in that** the adjustment speed is taken into account in the calculation of the auxiliary variable.

5. Method according to one of the preceding claims, **characterized in that** when the ride level adjustment system is activated a signal is generated and transmitted to a damper force adjustment device with which the damper force during the activated ride level adjustment process is changed.

6. Method according to Claim 5, **characterized in that** the signal includes information about the adjustment speed, and the damper force is changed as a function of the adjustment speed.

7. Method according to Claim 5 or 6, **characterized in that** the damper force is changed only in the case of adjustment speeds which lie in a range which is defined by limiting values, and **in that** the damper force is increased when the limiting values are exceeded.

**8.** Method according to one of Claims 5 to 7, **characterized in that** the adjustment speed is determined in advance and a parameter for the adaptation of the damper force is defined by reference to the determined adjustment speed.

**9.** Method according to one of Claims 5 to 8, **characterized in that** the damper force is adapted as a function of vehicle movement dynamic parameters, in particular the steering movement, the steering angle, the brake pressure and/or determined acceleration forces.

**10.** Method according to one of the preceding claims, **characterized in that** the time of deactivation is defined as a function of the change in the setpoint ride level value.

**Revendications**

**1.** Procédé de régulation du niveau de véhicules à suspension pneumatique à une valeur de consigne de niveau, dans lequel les dispositifs d'ajustement de niveau sont débranchés avant que la valeur de consigne soit atteinte,
**caractérisé en ce que**
l'instant du débranchement est défini en fonction de la force d'amortissement effective.

**2.** Procédé selon la revendication 1, **caractérisé en ce qu'**une grandeur auxiliaire qui dépend de la force d'amortissement effective à tout instant est superposée à la valeur de consigne du niveau, à une valeur effective de niveau ou à une différence de régulation.

**3.** Procédé selon les revendications 1 ou 2, **caractérisé en ce que** l'instant du débranchement est défini en fonction de la vitesse de régulation.

**4.** Procédé selon les revendications 2 ou 3, **caractérisé en ce que** la vitesse de régulation est prise en compte lors du calcul de la grandeur auxiliaire.

**5.** Procédé selon l'une des revendications précédentes, **caractérisé en ce que** lorsque la régulation de niveau est activée, un signal est formé et est transmis à un dispositif de régulation de la force d'amortissement qui modifie la force d'amortissement pendant que la régulation de niveau est activée.

**6.** Procédé selon la revendication 5, **caractérisé en ce que** le signal contient une information concernant la vitesse de régulation et **en ce que** la force d'amortissement est modifiée en fonction de la vitesse de régulation.

**7.** Procédé selon les revendications 5 ou 6, **caractérisé en ce que** la force d'amortissement n'est modifiée que si la vitesse de régulation est située dans une plage définie par des valeurs limites et **en ce que** la force d'amortissement est augmentée lorsque les valeurs limites sont dépassées.

**8.** Procédé selon l'une des revendications 5 à 7, **caractérisé en ce que** la vitesse de régulation est déterminée préalablement et **en ce qu'**un paramètre d'adaptation de la force d'amortissement est défini à l'aide de la vitesse de régulation ainsi déterminée.

**9.** Procédé selon l'une des revendications 5 à 8, **caractérisé en ce que** l'adaptation de la force d'amortissement s'effectue en fonction de paramètres de dynamique de roulage, en particulier du déplacement du volant, de l'angle de direction, de la pression de freinage et/ou des forces d'accélération déterminées.

**10.** Procédé selon l'une des revendications précédentes, **caractérisé en ce que** l'instant du débranchement est défini en fonction d'une modification de la valeur de consigne de niveau.

# FIG. 1

# FIG. 2

# FIG. 3

# FIG. 4

M

2

1

$P_L + P_{KD}$

## FIG. 5

$\dot{h}_{ist}$

$K_D$

$F_D$

$K_D$

$h_{soll}$ — $h_v$

$\Delta h$ → R

$K_D$

$h_{ist}$ — $h_v$ —

$h_{ist}$

## FIG. 6

$h_{soll,\,alt}$ — $h_{soll,\,neu}$

$h_{soll}$ $\Delta h_{soll}$ — $h_v$

$\Delta h$ → R

$h_{ist}$

# FIG. 7

# FIG. 8

# FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4333823 A1